# EUROPÄISCHE PATENTSCHRIFT

(11) **EP 1 588 083 B1**
(45) Veröffentlichungstag und Bekanntmachung des Hinweises auf die Patenterteilung: **25.06.2008**
(21) Anmeldenummer: 04726114.4
(22) Anmeldetag: 07.04.2004
(51) Int. Cl.: F16K 15/14

(54) **RÜCKFLUSSVERHINDERER**
BACKFLOW PREVENTER
SYSTEME ANTI-REFLUX

(30) Priorität: 12.04.2003 DE 10316903
(43) Veröffentlichungstag der Anmeldung: 26.10.2005
(73) Patentinhaber: Neoperl GmbH, 79379 Müllheim (DE)
(72) Erfinder: FANGMEIER, Martin, 79424 Auggen (DE)
(74) Vertreter: Maucher, Wolfgang
(86) Internationale Anmeldenummer: PCT/EP2004/003724
(87) Internationale Veröffentlichungsnummer: WO 2004/090394

(56) Entgegenhaltungen:
- CH-A- 572 179
- DE-B- 1 154 982
- DE-B- 1 475 998
- DE-C- 842 567
- FR-A- 1 457 038
- GB-A- 860 026
- GB-A- 875 034
- US-A- 3 324 877
- US-B1- 6 202 901

## Beschreibung

Die Erfindung betrifft einen Rückflussverhinderer, der in eine Gas- oder Flüssigkeitsleitung einsetzbar ist und einen als abströmseitig offener Hohlkörper ausgestalteten Schließkörper hat, der zwischen sich und einem zentralen Schließkörper-Gegenstück einen Durchflusskanal begrenzt, wobei der Schließkörper durch das in Durchströmrichtung durch den Durchflusskanal strömende Strömungsmedium von einer dichtend am Schließkörper-Gegenstück anliegenden Schließstellung gegen die Rückstellkraft seiner Eigenelastizität und/oder Eigenstabilität in eine Offenstellung bewegbar ist, und wobei der Schließkörper in seiner unbelasteten Schließstellung zunächst nur mit einem als Dichtlippe ausgestalteten Teilbereich an einem Teil- oder Endbereich des Schließkörper-Gegenstücks anliegt und unter dem Belastungsdruck des entgegen der Durchströmrichtung zurückströmenden Fluids unter Freigabe eines abströmseitigen Puffervolumens für das rückströmende Fluid zusätzlich mit einem Teilbereich seiner Längserstreckung gegen das Schließkörper-Gegenstück anpressbar ist.

Solche Rückflussverhinderer werden beispielsweise in sanitäre Wasserleitungen eingebaut, um das Rückfließen von Wasser und insbesondere das Rücksaugen von Schmutzwasser in die Trinkwasserleitung zu verhindern. Solche Rückflussverhinderer geben den Durchfluss frei, wenn das Wasser zu einer Entnahmestelle fließt. Dabei wird der Schließkörper durch das in Durchström- oder Entnahmerichtung strömende Strömungsmedium von seiner Schließstellung gegen die Rückstellkraft einer Rückstellfeder in eine Offenstellung bewegt. Bei einem unerwünschten Rückfließen wird der Schließkörper demgegenüber fest gegen den Ventilsitz gepresst und in seiner Schließstellung gehalten, womit dem rückströmenden Wasser der Rückweg versperrt ist.

Die vorbekannten Rückflussverhinderer sind meist vergleichsweise kompliziert und vielteilig aufgebaut und entsprechend aufwendig in der Herstellung. Es besteht daher die Aufgabe, einen Rückflussverhinderer zu schaffen, der sich durch seinen einfachen Aufbau auszeichnet, wobei dieser einfache Aufbau einen geringen Herstellungsaufwand und einen störungsfreien Betrieb begünstigen soll.

Aus der CH 572 179 A5 ist bereits ein Rückflussverhinderer bekannt, der in eine Gas- oder Flüssigkeitsleitung einsetzbar ist. Der vorbekannte Rückflussverhinderer weist einen kegelstumpfförmigen und abströmseitig offenen Schließkörper aus elastischem Material auf, der zwischen sich und einem zentralen Schließkörper-Gegenstück einen Durchflusskanal begrenzt. Der Schließkörper liegt in seiner Schließstellung dichtend am Schließkörper-Gegenstück an, das eine kegelförmige Außenkontur und an seinem Außenumfang Durchgänge für das das Schließkörper-Gegenstück durchströmende Fluid aufweist. Der am Schließkörper-Gegenstück dichtend anliegende und dabei die Durchgänge dicht verschließende Schließkörper wird durch das in Durchströmrichtung durch den Durchflusskanal strömende Fluid gegen die Rückstellkraft seiner Eigenelastizität in die Offenstellung bewegt. Demgegenüber vermag das entgegen der Durchströmrichtung rückströmende Fluid den Schließkörper zusätzlich an den Außenumfang des Schließkörper-Gegenstücks zu pressen.

Der Einsatz derartiger Rückschlagventile im Bereich von Einhebel-Mischbatterien bringt häufig jedoch das Problem mit sich, dass das Wasser, das beim Absperren der Kaltwasser- oder Warmwasserseite zwischen dem geschlossenen Rückschlagventil einerseits und dem ebenfalls geschlossenen Ventilsitz andererseits eingeschlossen ist, durch äußere Einflüsse stark aufgeheizt wird, bis Systemdrücke entstehen, die zu Beschädigungen am schwächsten Teil der Versorgungsleitung und somit häufig am Rückschlagventil führen. Dies kann letztlich ein Verschluss der Versorgungsleitung oder einen ebenfalls unerwünschten Kreuzfluss zur Folge haben.

Da der in CH 572 179 A5 vorgesehene Schließkörper unter dem Druck des entgegen der Durchströmrichtung rückströmenden Fluids immer fester an den Außenumfang des Schließkörper-Gegenstücks gepresst wird, können sich gerade bei dem aus CH 572 179 A5 vorbekannten Rückflussverhinderer unerwünscht hohe Drücke aufbauen.

Aus der DE 1 154 982 B und der DE 842 567 C sind mit dem in CH 572 179 A5 beschriebenen Patentgegenstand vergleichbare Rückflussverhinderer bekannt, deren Einsatz ebenfalls mit den oben beschriebenen Nachteilen und Risiken verbunden ist.

Aus der DE 1 475 998 ist ein Rückschlagventil bekannt, das in eine Fluidleitung einsetzbar ist. Das vorbekannte Rückschlagventil weist einen Schließkörper aus elastischem Material auf, der als abströmseitig offener Hohlkörper ausgestaltet ist und an einem im Rückschlagventil längsverschiebbaren Gleitring gehalten ist. Der Schließkörper begrenzt zwischen sich und einem zentralen Schließkörper-Gegenstück einen Durchflusskanal. Strömt das Fluid entgegen der üblichen Fließrichtung zurück, legt sich der Schließkörper zunächst mit einem als Dichtlippe ausgestalteten Teilbereich am Schließkörper-Gegenstück an. Unter dem Belastungsdruck des entgegen der üblichen Durchströmrichtung rückströmenden Fluids wird der Gleitring sodann von seiner einen Endstellung in die dem Schließkörper-Gegenstück angenäherte Schiebe-Endstellung bewegt, wobei sich der Schließkörper nun vollflächig an die Außenkontur des Schließkörper-Gegenstücks anlegen kann. Dabei wird ein abströmseitiges Puffervolumen für das rückströmende Fluid freigegeben.

Da der Schließkörper jedoch an einem im vorbekannten Rückflussverhinderer längsverschiebbaren Gleitring gehalten ist, und da die ordnungsgemäße Funktionsweise des vorbekannten Rückflussverhinderers eine stets uneingeschränkte Längsverschieblichkeit des Gleitringes voraussetzt, ist der aus DE 1 475 998 vorbekannte Rückflussverhinderer vergleichsweise aufwändig und störungsanfällig. Darüber hinaus besteht die Gefahr, dass bei einer übermäßigen Innendruckerhöhung das Fluid am Schließkörper vorbei durch den zwischen Gleitring und Führungswandung eventuell verbleibenden Spalt rückströmen kann.

Es besteht daher die Aufgabe, einen gattungsgemäßen Rückflussverhinderer zu schaffen, dessen einfacher Aufbau einen geringen Herstellungsaufwand und einen störungsfreien Betrieb begünstigt, wobei der Rückflussverhinderer auch einer übermäßigen Innendruckerhöhung wirkungsvoll entgegenwirken soll.

Die erfindungsgemäße Lösung dieser Aufgabe besteht bei dem gattungsgemäßen Rückflussverhinderer darin, dass der Schließkörper relativ zum Schließkörper-Gegenstück unverrückbar im Rückflussverhinderer gehalten ist und das zentrale Schließkörper-Gegenstück mit einer Anströmplatte verbunden ist.

Der Schließkörper des erfindungsgemäßen Rückflussverhinderers, der als abströmseitig offener Hohlkörper ausgestaltet ist und ein zentrales Schließkörper-Gegenstück umschließt, liegt in seiner, von einer starken Rückströmung noch unbelasteten Schließstellung zunächst nur mit einem als Dichtlippe ausgestalteten Teilbereich an einem Teil- oder Endbereich des Schließkörper-Gegenstücks an. Unter dem Belastungsdruck des entgegen der Durchströmrichtung rückströmenden Fluids wird der Schließkörper zusätzlich mit einem Teilbereich seiner Längserstreckung gegen das Schließkörper-Gegenstück gepresst, womit dem rückströmenden Medium der Rückweg versperrt ist. Dabei wird nicht nur die Dichtfläche zwischen dem Schließkörper und dem Schließkörper-Gegenstück vergrößert und die Dichtwirkung wirkungsvoll erhöht, - vielmehr wird zwischen der Außenseite des zum Schließkörper-Gegenstück gepressten Schließkörpers einerseits und der umgrenzenden Innenwandung andererseits ein abströmseitiges Puffervolumen für das rückströmende Fluid freigegeben und somit einer unerwünschten und eventuell schädigenden Innendruckerhöhung entgegengewirkt. Fließt das Fluid demgegenüber in Durchströmrichtung, wird der Schließkörper durch das durch den Durchflusskanal strömende Strömungsmedium von seiner dichtend am Schließkörper-Gegenstück anliegenden Schließstellung gegen die Rückstellkraft seiner Eigenelastizität und/oder Eigenstabilität in eine Offenstellung bewegt. Dabei begrenzen der Schließkörper und das Schließkörper-Gegenstück zwischen sich einen vom gasförmigen oder flüssigen Strömungsmedium in Durchström- oder Entnahmerichtung durchströmten Durchflusskanal.

Da der Schließkörper als Hohlkörper ausgebildet und aus eigenelastischem Material hergestellt ist, und da bei dem erfindungsgemäßen Rückflussverhinderer somit auf einen beweglichen Ventilkörper aus hartem Material verzichtet werden kann, wird auch einer unerwünschten Geräuschbildung bei der Rückstellbewegung des Schließkörpers von der Offenstellung in seine Schließstellung vermieden und Druckwellen, welche durch schnelles Schließen von abströmseitigen Schließorganen entstehen, werden durch die elastische Verdrehung des Puffervolumens abgedämpft. Die bei vorbekannten Rückflussverhinderern durch das schnelle Schließen eines abströmseitigen Verschlussorganes bewirkte und als störendes Geräusch wahrnehmbare Druckwelle wird bei dem erfindungsgemäßen Rückflussverhinderers durch die teilweise Verdrängung des erfindungsgemäß vorgesehenen Puffervolumens abgeschwächt und wirkungsvoll gedämpft.

Damit der Schließkörper auch eine hohe Anzahl von Öffnungs- und Schließbewegungen in schneller Folge mitmachen kann, ist es vorteilhaft, wenn der Schließkörper aus einem elastischen Material hergestellt ist. Damit auch ein unter hohem Druck rückströmendes Medium den am Schließkörper-Gegenstück anliegenden Randbereich des Schließkörpers nicht über den verjüngten Endbereich des Schließkörper-Gegenstücks schieben kann, ist es vorteilhaft, wenn die Dichtlippe an ihrem am Schließkörper-Gegenstück anliegenden freien Randbereich eine einer Erweiterung des Randbereich-Umfangs entgegenwirkende Randverstärkung aufweist.

Diese Randverstärkung kann beispielsweise als eine ringförmige und undehnbar ausgestaltete Materialeinlage im Schließkörper-Randbereich ausgestaltet sein. Die einfache Herstellung des erfindungsgemäßen Rückflussverhinderers wird jedoch begünstigt, wenn die Randverstärkung als umlaufende Querschnittserweiterung oder Querschnittsverdickung des Schließkörpers ausgestaltet ist.

Eine bevorzugte Ausführungsform gemäß der Erfindung sieht vor, dass der Schließkörper einen gerundeten Endbereich hat und vorzugsweise tropfenförmig ausgestaltet ist. Bei dieser Ausführungsform wird die hohe Durchflussleistung und der geringe Druckverlust des erfindungsgemäßen Rückflussverhinderers noch zusätzlich begünstigt.

Zweckmäßig ist es, wenn die Anströmplatte im Durchflusskanal mündende Durchflussöffnungen hat.

Die Anströmplatte zeichnet sich im Bereich des Durchflusskanals durch einen möglichst geringen Strömungswiderstand aus, wenn die Anströmplatte im Bereich des Durchflusskanals als Sieb- oder Lochplatte mit vorzugsweise wabenförmig ausgestalteten Durchflussöffnungen ausgestaltet ist.

Die einfache Herstellung des erfindungsgemäßen Rückflussverhinderers wird noch begünstigt, wenn die Anströmplatte und das Schließkörper-Gegenstück einstückig miteinander verbunden sind.

Eine besonders einfache und kostengünstig herstellbare Ausführungsform gemäß der Erfindung sieht vor, dass der Schließkörper am Außenumfang der Anströmplatte gehalten ist.

Um den erfindungsgemäßen Rückflussverhinderer mit geringem Aufwand auch aus nur wenigen Bauteilen herstellen zu können, ist es vorteilhaft, wenn der Schließkörper in seinem an der Anströmplatte gehaltenen Schließkörper-Abschnitt dichtend am Innenumfang der Gas- oder Flüssigkeitsleitung anliegt. Bei dieser Ausführungsform kann auf einen separaten Dichtring verzichtet werden. Statt eines solchen Dichtrings übernimmt der Schließkörper mit seinem am Innenumfang der Gas- oder Flüssigkeitsleitung anliegenden Schließkörper-Abschnitt die Dichtfunktion.

Um diese Dichtfunktion noch zusätzlich zu unterstützen, ist es vorteilhaft, wenn der dichtend an der Gas- oder Flüssigkeitsleitung anliegende zuströmseitige Stirnrandbereich des Schließkörpers als ringförmig umlaufende Querschnittsverdickung ausgestaltet ist. Dabei sieht eine besonders vorteilhafte Weiterbildung gemäß der Erfindung vor, dass der Schließkörper mit seiner Querschnittsverdickung in einer am Außenumfang der Anströmplatte vorgesehenen Haltenut gehalten ist.
Der geringe Herstellungsaufwand wird noch begünstig, wenn der Rückflussverhinderer im wesentlichen zweiteilig ausgestaltet ist und den Schließkörper einerseits sowie das Schließkörper-Gegenstück mit der daran einstückig verbundenen Anströmplatte andererseits aufweist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen, in eine Gas- oder Flüssigkeitsleitung eingesetzten und in einem Längsschnitt dargestellten Rückflussverhinderer in seiner vom Strömungsmedium unbeaufschlagten Ausgangs- oder Schließstellung,
- Fig. 2: den Rückflussverhinderer aus Fig. 1, wobei der Rückflussverhinderer links der Mittelachse in seiner Schließstellung und rechts der Mittelachse in seiner Offenstellung dargestellt ist, und
- Fig. 3: den Rückflussverhinderer aus Fig. 1 und 2 in einer Draufsicht auf eine zuströmseitig vorgesehene Anströmplatte.

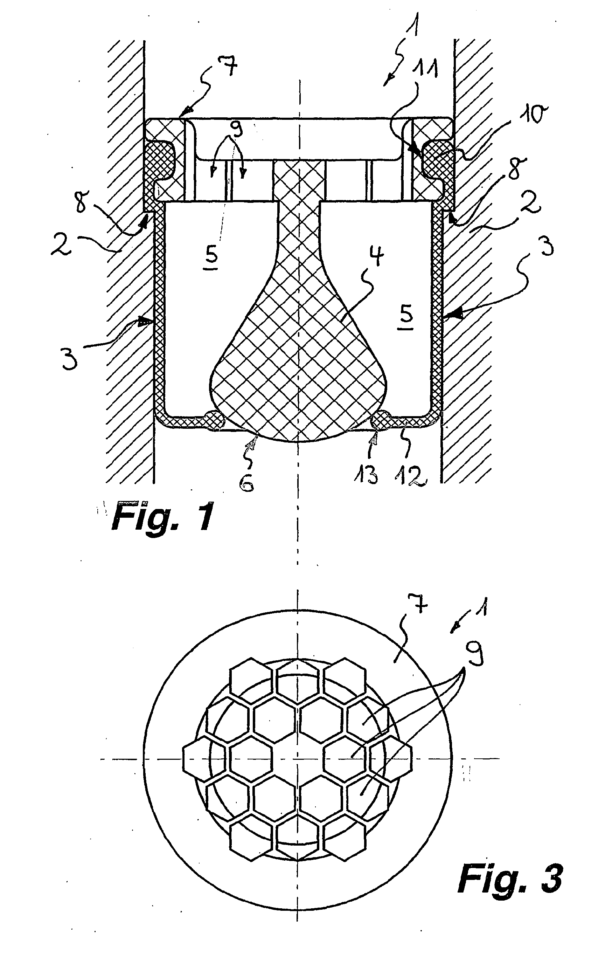

In den Fig. 1 bis 3 ist ein Rückflussverhinderer 1 dargestellt, der in eine Gas- oder Flüssigkeitsleitung einsetzbar und hier in eine sanitäre Wasserleitung 2 eingebaut ist. Der Rückflussverhinderer 1 weist einen Schließkörper 3 auf, der als abströmseitig offener und im wesentlichen topfförmiger Hohlkörper ausgestaltet ist.

Wie aus der in Fig. 1 gezeigten und vom Strömungsmedium unbelasteten Schließ- oder Ausgangsstellung des Rückflussverhinderers 1 deutlich wird, begrenzt dessen Schließkörper 3 zwischen sich und einem zentralen Schließkörper-Gegenstück 4 einen Durchflusskanal 5.

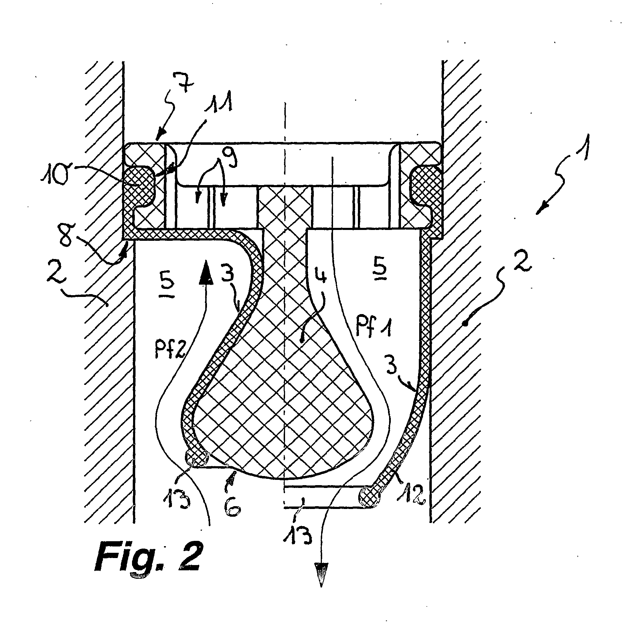

In der linken Hälfte von Fig. 2 ist gezeigt, wie der aus elastischem oder formnachgiebigen Material hergestellte Schließkörper 3 durch rückströmendes und den Schließkörper 3 außenseitig beaufschlagendes Strömungsmedium in seiner Schließstellung zusätzlich festgelegt und über einen großen Teilbereich seiner Längserstreckung gegen das Schließkörper-Gegenstück 4 gepresst wird. Dabei legt sich der Schließkörper unter dem Belastungsdruck des entgegen der Durchströmrichtung rückströmenden Fluids derart an das Schließkörper-Gegenstück 4 an, das zwischen dem Schließkörper und der umgrenzenden Innenwandung der Rohrleitung ein abströmseitiges Puffervolumen für das rückströmende Fluid freigegeben wird. Durch die Freigabe dieses abströmseitigen Puffervolumens wird einer unerwünschten Innendruckerhöhung entgegengewirkt, die ansonsten die Gas- oder Flüssigkeitsleitung und/oder die darin eingebauten Funktionseinheiten schädigen könnte. Demgegenüber ist der Rückflussverhinderer 1 in der rechten Hälfte von Fig. 2 in seiner Offenstellung gezeigt. Dabei wird deutlich, dass der Schließkörper 3 durch das in Durchströmrichtung Pf 1 durch den Durchflusskanal 5 strömende Strömungsmedium von einer dichtend am Schließkörper-Gegenstück 4 anliegenden Schließstellung gegen die Rückstellkraft seiner Eigenelastizität oder Eigenstabilität in die Offenstellung bewegbar ist.

Aus den Fig. 1 und 2 wird erkennbar, dass das aus formstabilem Material hergestellte Schließkörper-Gegenstück 4 einen sich in Durchströmrichtung Pf 1 verjüngenden und hier gerundeten Endbereich 6 hat. Das Schließkörper-Gegenstück 4 ist dazu im wesentlichen tropfenförmig ausgestaltet. Dabei ist das Schließkörper-Gegenstück 4 mit der zuströmseitigen Spitze seiner Tropfenform einstückig mit einer quer zur Durchströmrichtung Pf 1 orientierten Anströmplatte 7 verbunden, die randseitig auf zumindest einem hier als Ringflansch 8 ausgestalteten Auflager in der Gas- oder Flüssigkeitsleitung 2 aufliegt.
Möglich ist, dass das Schließkörper-Gegenstück 4 durch zumindest einen Zuströmkanal durchsetzt ist, der im Durchflusskanal 5 mündet. Hier jedoch weist die Anströmplatte 7 stattdessen Durchflussöffnungen 9 auf, die im Durchflusskanal 5 münden. Aus der in Fig. 3 gezeigten Draufsicht auf die zuströmseitige Stirnseite der Anströmplatte 7 wird deutlich, dass diese im Bereich des Durchflusskanals 5 als Sieb- oder Lochplatte mit vorzugsweise wabenförmigen Durchflusslöchern 9 ausgestaltet ist.

Der Schließkörper 3 ist am Außenumfang der Anströmplatte 7 gehalten. Dabei liegt der Schließkörper 3 in seinem an der Anströmplatte 7 gehaltenen Schließkörper-Abschnitt derart dichtend am Innenumfang der Gas- oder Flüssigkeitsleitung 2 an, dass auf eine zusätzliche Ringdichtung zwischen Rückflussverhinderer 1 und Gas- oder Flüssigkeitsleitung 2 verzichtet werden kann.

Um die Dichtwirkung des Schließkörpers 3 in diesem Bereich noch zusätzlich zu begünstigen, ist der dichtend an der Gas- oder Flüssigkeitsleitung 2 anliegende zuströmseitige Stirnrandbereich des Schließkörpers 3 als ringförmig umlaufende Querschnittsverdickung 10 ausgestaltet. Dabei ist in den Fig. 1 und 2 zu erkennen, dass der Schließkörper 2 mit seiner Querschnittsverdickung 10 in einer am Außenumfang der Anströmplatte 7 vorgesehenen Haltenut 11 gehalten ist.

An seinem abströmseitigen Teilbereich ist der Schließkörper 3 als Dichtlippe 12 ausgestaltet, die an dem sich verjüngenden und hier gerundeten Endbereich 6 des Schließkörper-Gegenstücks 4 anliegt. Damit der Schließkörper 3 durch das in Gegenrichtung Pf 2 rückströmende und ihn von außen beaufschlagende Strömungsmedium noch zusätzlich fest an das als Ventilsitz dienende Schließkörper-Gegenstück 4 gepresst wird und damit auch ein unter hohem Druck rückströmendes Medium den am Schließkörper-Gegenstück 4 anliegenden Randbereich des Schließkörpers 3 nicht über den verjüngten Endbereich 6 des Schließkörper-Gegenstücks 4 schieben kann, weist die Dichtlippe 12 an ihrem am Schließkörper-Gegenstück 4 anliegenden freien Randbereich eine einer Erweiterung des Randbereich-Umfangs entgegenwirkende Randverstärkung 13 auf. Diese Randverstärkung 13 ist hier als umlaufende Querschnittserweiterung oder Querschnittsverdickung des Schließkörpers 3 ausgestaltet.

Der Schließkörper 3 des hier dargestellten Rückflussverhinderers 1 ist als abströmseitig offener Hohlkörper ausgestaltet, der das zentrale Schließkörper-Gegenstück 4 umschließt. Der Schließkörper 3 und das Schließkörper-Gegenstück 4 begrenzen zwischen sich einen vom gasförmigen oder flüssigen Strömungsmedium in Durchström- oder Entnahmerichtung Pf 1 durchströmten Durchflusskanal 5. Dabei wird der Schließkörper 3 durch das durch den Durchflusskanal 5 strömende Strömungsmedium von seiner dichtend am Schließkörper-Gegenstück 4 anliegenden Schließstellung gegen die Rückstellkraft seiner Eigenelastizität und/oder Eigenstabilität in seine Offenstellung bewegt. Beim Rückfließen des Strömungsmediums in die Gegenrichtung Pf 2 wird der vom rückströmenden Medium außenseitig beaufschlagte Schließkörper 3 demgegenüber in seiner Schließstellung gehalten, womit dem rückströmenden Medium der Rückweg versperrt ist.

Es ist ein besonderer Vorteil des hier dargestellten Rückflussverhinderers 1, dass dieser mit geringem Aufwand aus nur wenigen Bauteilen hergestellt werden kann. Dabei ist der hier dargestellte Rückflussverhinderer 1 zweiteilig ausgestaltet und besteht im wesentlichen aus dem mit der Anströmplatte 7 einstückig verbundenen Schließkörper-Gegenstück 4 einerseits und dem Schließkörper 3 andererseits. Der hier dargestellte Rückflussverhinderer zeichnet sich durch eine hohe Durchflussleistung bei einem vergleichsweise geringen Druckverlust aus.

## Patentansprüche

1. Rückflussverhinderer (1), der in eine Gas- oder Flüssigkeitsleitung (2) einsetzbar ist und einen als abströmseitig offener Hohlkörper ausgestalteten Schließkörper (3) hat, der (3) zwischen sich und einem zentralen Schließkörper-Gegenstück (4) einen Durchflusskanal (5) begrenzt, wobei der Schließkörper (3) durch das in Durchströmrichtung (Pf 1) durch den Durchflusskanal (5) strömende Strömungsmedium von einer dichtend am Schließkörper-Gegenstück (4) anliegenden Schließstellung gegen die Rückstellkraft seiner Eigenelastizität und/oder Eigenstabilität in eine Offenstellung bewegbar ist, und wobei der Schließkörper (3) in seiner unbelasteten Schließstellung zunächst nur mit einem als Dichtlippe (12) ausgestalteten Teilbereich an einem Teil- oder Endbereich (6) des Schließkörper-Gegenstücks (4) anliegt und unter dem Belastungsdruck des entgegen der Durchströmrichtung (Pf1) rückströmenden Fluids unter Freigabe eines abströmseitigen Puffervolumens für das rückströmende Fluid zusätzlich mit einem Teilbereich seiner Längserstreckung gegen das Schließkörper-Gegenstück (4) anpressbar ist, **dadurch gekennzeichnet, dass** der Schließkörper (3) relativ zum Schließkörper-Gegenstück (4) unverrückbar im Rückflußverhinderer (1) gehalten ist und das zentrale Schließkörper-Gegenstück (4) mit einer Anströmplatte (7) verbunden ist.

2. Rückflussverhinderer nach Anspruch 1, **dadurch gekennzeichnet, dass** die Dichtlippe (12) an ihrem am Schließkörper-Gegenstück (4) anliegenden freien Randbereich eine einer Erweiterung des Randbereich-Umfangs entgegenwirkende Randverstärkung (13) aufweist.

3. Rückflussverhinderer nach einem der Ansprüche 1 oder 2, **dadurch gekennzeichnet, dass** die Randverstärkung (13) als umlaufende Querschnittserweiterung oder Querschnittsverdickung des Schließkörpers (3) ausgestaltet ist.

4. Rückflussverhinderer nach einem der Ansprüche 1 bis 3, **dadurch gekennzeichnet, dass** das Schließkörper-Gegenstück (4) einen gerundeten Endbereich (6) hat und vorzugsweise tropfenförmig ausgestaltet ist.

5. Rückflussverhinderer nach einem der Ansprüche 1 bis 4, **dadurch gekennzeichnet, dass** die Anströmplatte (7) im Durchflusskanal (5) mündende Durchflussöffnungen (9) hat.

6. Rückflussverhinderer nach einem der Ansprüche 1 bis 5, **dadurch gekennzeichnet, dass** die Anströmplatte (7) im Bereich des Durchflusskanals (5) als Sieb- oder Lochplatte mit vorzugsweise wabenförmigen Durchflussöffnungen (9) ausgestaltet ist.

7. Rückflussverhinderer nach einem der Ansprüche 1 bis 6, **dadurch gekennzeichnet, dass** die Anströmplatte (7) und das Schließkörper-Gegenstück (4) einstückig miteinander verbunden sind.

8. Rückflussverhinderer nach einem der Ansprüche 1 bis 7, **dadurch gekennzeichnet, dass** der Schließkörper (3) am Außenumfang der Anströmplatte (7) gehalten ist.

9. Rückflussverhinderer nach einem der Ansprüche 1 bis 8, **dadurch gekennzeichnet, dass** der Schließkörper (3) in seinem an der Anströmplatte (7) gehaltenen Schließkörper-Abschnitt dichtend am Innenumfang der Gas- oder Flüssigkeitsleitung (2) anliegt.

10. Rückflussverhinderer nach einem der Ansprüche 1 bis 9, **dadurch gekennzeichnet, dass** der dichtend an der Gas- oder Flüssigkeitsleitung (2) anliegende zuströmseitige Stirnrandbereich des Schließkörpers (3) als ringförmig umlaufende Querschnittsverdickung (10) ausgestaltet ist.

11. Rückflussverhinderer nach einem der Ansprüche 1 bis 10, **dadurch gekennzeichnet, dass** der Schließkörper (3) mit seiner Querschnittsverdickung (10) in einer am Außenumfang der Anströmplatte (7) vorgesehenen Haltenut (11) gehalten ist.

12. Rückflussverhinderer nach einem der Ansprüche 1 bis 11, **dadurch gekennzeichnet, dass** der Rückflussverhinderer (1) im wesentlichen zweiteilig ausgestaltet ist und den Schließkörper (3) einerseits sowie das Schließkörper-Gegenstück (4) mit der daran einstückig verbundenen Anströmplatte (7) andererseits aufweist.

## Claims

1. Backflow preventer (1) which can be inserted in a gas- or fluid-carrying pipe (2) and has a closure member (3) in the form of a hollow body open on the outflow side which defines a throughflow channel (5) between itself and a central closure member mating part (4), the closure member (3) being movable by the flow medium flowing through the throughflow channel (5) in the direction of throughflow (Pf 1) from a closed position, in which it fits sealingly against the closure member mating part (4), counter to the restoring force of its inherent elasticity and/or inherent stability, into an open position, and wherein the closure member (3) in its unstressed closed position initially abuts on a partial or end region (6) of the closure member mating part (4) only with a partial region in the form of a sealing lip (12), and under the loading pressure of the fluid flowing back against the direction of throughflow (Pf 1) can additionally be pressed against the closure member mating part (4) with a partial region of its longitudinal extent, thereby freeing up a buffer volume for the returning fluid on the outflow side, **characterised in that** the closure member (3) is held in the backflow preventer (1) so as to be immovable relative to the closure member mating part (4) and the central closure member mating part (4) is connected to an inflow plate (7).

2. Backflow preventer according to claim 1, **characterised in that** the sealing lip (12) comprises, on its free edge region abutting on the closure member mating part (4), an edge reinforcement (13) that opposes any widening of the periphery of the edge region.

3. Backflow preventer according to one of claims 1 or 2, **characterised in that** the edge reinforcement (13) is constructed as a widening or thickening that encircles the cross-section of the closure member (3).

4. Backflow preventer according to one of claims 1 to 3, **characterised in that** the closure member mating part (4) has a rounded end region (6) and is preferably shaped like a teardrop.

5. Backflow preventer according to one of claims 1 to 4, **characterised in that** the inflow plate (7) has throughflow openings (9) that empty into the throughflow channel (5).

6. Backflow preventer according to one of claims 1 to 5, **characterised in that** the inflow plate (7) in the region of the throughflow channel (5) is constructed as a perforated or sieve plate with preferably honeycomb-shaped throughflow openings (9).

7. Backflow preventer according to one of claims 1 to 6, **characterised in that** the inflow plate (7) and the closure member mating part (4) are integrally connected to each other.

8. Backflow preventer according to one of claims 1 to 7, **characterised in that** the closure member (3) is secured at the outer periphery of the inflow plate (7).

9. Backflow preventer according to one of claims 1 to 8, **characterised in that** the closure member (3), at its closure member portion secured on the inflow plate (7), abuts sealingly on the inner periphery of the gas- or fluid-carrying pipe (2).

10. Backflow preventer according to one of claims 1 to 9, **characterised in that** the end edge region of the closure member (3) on the inflow side, abutting sealingly on the gas- or fluid-carrying pipe (2), is constructed as a thickening of the cross-section (10) extending in an annular configuration.

11. Backflow preventer according to one of claims 1 to 10, **characterised in that** the closure member (3) is held, with its thickened cross section (10), in a retaining groove (11) provided on the outer periphery of the inflow plate (7).

12. Backflow preventer according to one of claims 1 to 11, **characterised in that** the backflow preventer (1) is constructed substantially in two parts and comprises the closure member (3), on the one hand, and the closure member mating part (4) with the inflow plate (7) integrally connected thereto, on the other hand.

## Revendications

1. Dispositif antiretour (1), qui peut être installé dans une conduite (2) de gaz ou de liquide et qui possède un obturateur (3) réalisé sous forme de corps creux ouvert du côté du flux sortant, lequel obturateur (3) délimite un canal d'écoulement (5) entre lui-même et un pendant central d'obturateur (4), sachant que l'obturateur (3) peut, par le fluide s'écoulant dans la direction d'écoulement (Pf1) à travers le canal d'écoulement (5), être déplacé à l'encontre de la force de rappel de son élasticité propre et/ou de sa stabilité propre d'une position fermée, appliquée en étanchéité contre le pendant d'obturateur (4), dans une position ouverte, et sachant que l'obturateur (3), dans sa position fermée non sollicitée, s'applique initialement uniquement par une région partielle réalisée sous forme de lèvre d'étanchéité (12) contre une région partielle ou terminale (6) du pendant d'obturateur (4) et, sous la pression de sollicitation du fluide refluant à l'encontre de la direction d'écoulement (Pf1), en libérant un volume d'accumulation du côté du flux sortant pour le fluide refluant, peut être en outre pressé par une région partielle de son étendue longitudinale contre le pendant d'obturateur (4), **caractérisé en ce que** l'obturateur (3) est maintenu dans le dispositif antiretour (1) de manière immuable relativement au pendant d'obturateur (4), et le pendant central d'obturateur (4) est relié à une plaque de flux entrant (7).

2. Dispositif antiretour selon la revendication 1, **caractérisé en ce que** la lèvre d'étanchéité (12) présente, sur sa région de bord libre s'appliquant contre le pendant d'obturateur (4), un renforcement de bord (13) s'opposant à un élargissement du pourtour de la région de bord.

3. Dispositif antiretour selon la revendication 1 ou 2, **caractérisé en ce que** le renforcement de bord (13) est réalisé sous forme d'élargissement ou d'épaississement entourant de la section de l'obturateur (3).

4. Dispositif antiretour selon l'une des revendications 1 à 3, **caractérisé en ce que** le pendant d'obturateur (4) possède une région terminale arrondie (6) et est de préférence réalisé en forme de goutte.

5. Dispositif antiretour selon l'une des revendications 1 à 4, **caractérisé en ce que** la plaque de flux entrant (7) possède des ouvertures d'écoulement (9) débouchant dans le canal d'écoulement (5).

6. Dispositif antiretour selon l'une des revendications 1 à 5, **caractérisé en ce que** la plaque de flux entrant (7) est réalisée dans la région du canal d'écoulement (5) sous forme de plaque de tamis ou de plaque perforée avec des ouvertures d'écoulement (9) de préférence en forme d'alvéoles.

7. Dispositif antiretour selon l'une des revendications 1 à 6, **caractérisé en ce que** la plaque de flux entrant (7) et le pendant d'obturateur (4) sont mutuellement reliés d'un seul tenant.

8. Dispositif antiretour selon l'une des revendications 1 à 7, **caractérisé en ce que** l'obturateur (3) est maintenu sur le pourtour extérieur de la plaque de flux entrant (7).

9. Dispositif antiretour selon l'une des revendications 1 à 8, **caractérisé en ce que** l'obturateur (3) s'applique en étanchéité contre le pourtour intérieur de la conduite (2) de gaz ou de liquide dans sa partie d'obturateur maintenue contre la plaque de flux entrant (7).

10. Dispositif antiretour selon l'une des revendications 1 à 9, **caractérisé en ce que** la région de bord frontal côté flux entrant de l'obturateur (3), appliquée en étanchéité contre la conduite (2) de gaz ou de liquide, est réalisée sous forme d'épaississement de section annulairement entourant (10).

11. Dispositif antiretour selon l'une des revendications 1 à 10, **caractérisé en ce que** l'obturateur (3) est maintenu par son épaississement de section (10) dans une rainure de maintien (11) prévue sur le pourtour extérieur de la plaque de flux entrant (7).

12. Dispositif antiretour selon l'une des revendications 1 à 11, **caractérisé en ce que** le dispositif antiretour (1) est réalisé pour l'essentiel en deux parties et présente d'une part l'obturateur (3), et d'autre part le pendant d'obturateur (4) avec la plaque de flux entrant (7) qui lui est reliée d'un seul tenant.
